# EUROPEAN PATENT APPLICATION

(11) **EP 4 752 049 A1**
(43) Date of publication of application: **03.06.2026**
(21) Application number: 25215898.5
(22) Date of filing: 14.11.2025
(51) Int. Cl.: B64C 3/58, B64C 9/02, B64C 9/32, B64C 3/54, B64C 23/06

(54) **LEADING EDGE SPOILER**

(30) Priority: 28.11.2024 GB 202417529
(71) Applicant: Airbus Operations Limited, Bristol BS34 7PA (GB)
(72) Inventor: KIRK, James Graham, Bristol, BS34 7PA (GB)
(74) Representative: Worthington, Richard Easton

(57) **Abstract**

An aircraft wing comprising: a wing structure supporting a wing cover, the wing cover having an outer aerodynamic surface, which forms part of an aerofoil profile of the wing, and a recess stepped back from the wing aerofoil profile; and a spoiler device comprising a spoiler coupled to the wing structure by a spoiler actuation mechanism for moving the spoiler between a retracted position and a deployed position, the spoiler having a surface which follows a contour of the wing aerofoil profile and where the spoiler is housed entirely in the recess when the spoiler is in the retracted position, and wherein the spoiler surface is extended away from the wing cover when the spoiler is in the deployed position.

## Description

### FIELD OF THE INVENTION

The present invention relates to an aircraft wing and an aircraft.

### BACKGROUND OF THE INVENTION

It is known to provide spoiler devices on aircraft wings for spoiling lift generated by the wing; for load alleviation; and for roll control. Such spoiler devices are generally movable between a deployed position where they destroy lift generated by the wing, and a retracted position where they do not spoil lift generated by the wing. In the deployed position, there is typically a gap or cutout about the profile of the wing. This cutout could affect the local structural integrity of the wing requiring strengthening, adding weight, or could lead to an ingress of airflow into the inner structure of the wing. These factors can affect the performance of the spoiler device and/or the aircraft wing.

### SUMMARY OF THE INVENTION

A first aspect of the invention provides an aircraft wing comprising: a wing structure supporting a wing cover, the wing cover having an outer aerodynamic surface, which forms part of an aerofoil profile of the wing, and a recess stepped back from the wing aerofoil profile; and a spoiler device comprising a spoiler coupled to the wing structure by a spoiler actuation mechanism for moving the spoiler between a retracted position and a deployed position, the spoiler having a surface which follows a contour of the wing aerofoil profile and where the spoiler is housed entirely in the recess when the spoiler is in the retracted position, and wherein the spoiler surface is extended away from the wing cover when the spoiler is in the deployed position.

Optionally, the wing cover has a substantially constant thickness at a first portion having the outer aerodynamic surface and a second portion having the recess.

Optionally, the spoiler comprises a spoiler seal arranged to engage the wing cover to form a sealed interface between the spoiler surface and the outer aerodynamic surface of the wing cover when the spoiler is in the retracted position.

Optionally, the spoiler actuation mechanism extends through at least one aperture in the portion of the wing cover having the recess, optionally wherein the aperture(s) have an area of less than 20% of the area of the spoiler surface. Minimising the surface area of the aperture(s) may reduce the effect the apertures have on the load carrying structure of the wing.

Optionally, each aperture comprises an aperture seal.

Optionally, the wing structure includes a front spar, and wherein the recess in the wing cover is located adjacent the front spar, and preferably is located immediately aft of the front spar.

Optionally, the wing cover is an upper wing cover.

Optionally, the spoiler is located in an outboard portion of the wing, preferably at a spanwise location of at least 60% of the wing span.

Optionally, the aircraft wing comprises a fixed wing portion and a folding wing tip portion rotatable relative to the fixed wing portion, and wherein the spoiler device is provided in the folding wing tip portion of the aircraft wing.

Optionally, the aircraft wing further comprises a leading edge movable high lift device positioned fore of the spoiler.

Optionally, the spoiler is located at a portion of the wing which is away from a contained liquid fuel volume.

Optionally, the spoiler is located at a spanwise location of the wing having no trailing edge high lift device.

Optionally, the spoiler actuation mechanism is configured to move the spoiler in rotation and/or in translation from the retracted position to the deployed position.

Optionally, the actuation mechanism comprises at least one link arranged to rotate relative to the wing structure, the link coupled to a forward portion of the spoiler.

Optionally, the link comprises a curved portion having a constant radius of curvature relative to the point at which it is rotatably coupled to the wing structure, and an extension portion extending between the curved position and the rotation point so as to form a gooseneck.

Optionally, the aircraft wing further comprises a plurality of the spoiler devices arranged in a spanwise direction of the aircraft wing, wherein the plurality of spoiler devices are received within a common recess of the wing cover when in their respective retracted positions.

A further aspect of the invention provides an aircraft comprising the aircraft wing of the first aspect of the invention.

### BRIEF DESCRIPTION OF THE DRAWINGS

Embodiments of the invention will now be described with reference to the accompanying drawings, in which:
Figure 1 shows a schematic view of an aircraft;
Figure 2 shows a schematic view of a portion of an aircraft wing;
Figure 3 shows a schematic view of an aircraft wing structure;
Figure 4 shows a cross-sectional view of an aircraft wing;
Figure 5 shows a cross-sectional view of an aircraft wing comprising a first spoiler device;
Figure 6 shows a further cross-sectional view of the aircraft wing of Figure 5;
Figure 7 shows an enlarged schematic view of a portion of the aircraft wing of Figure 5;
Figure 8 shows a schematic top view of a portion of an aircraft wing;
Figure 9 shows a cross-sectional view of an aircraft wing;
Figure 10 shows a cross-sectional view of an aircraft wing comprising a second spoiler device;
Figure 11 shows a further cross-sectional view of the aircraft wing of Figure 10;
Figure 12 shows a cross-sectional view of an aircraft wing comprising a third spoiler device;
Figure 13 shows a further cross-sectional view of the aircraft wing of Figure 12;
Figure 14 shows a perspective view of the aircraft wing of Figure 13;
Figure 15 shows a schematic view of an aircraft wing;
Figure 16 shows a schematic view of a portion of an aircraft wing; and
Figure 17 shows a schematic view of a further aircraft wing.

### DETAILED DESCRIPTION OF EMBODIMENT(S)

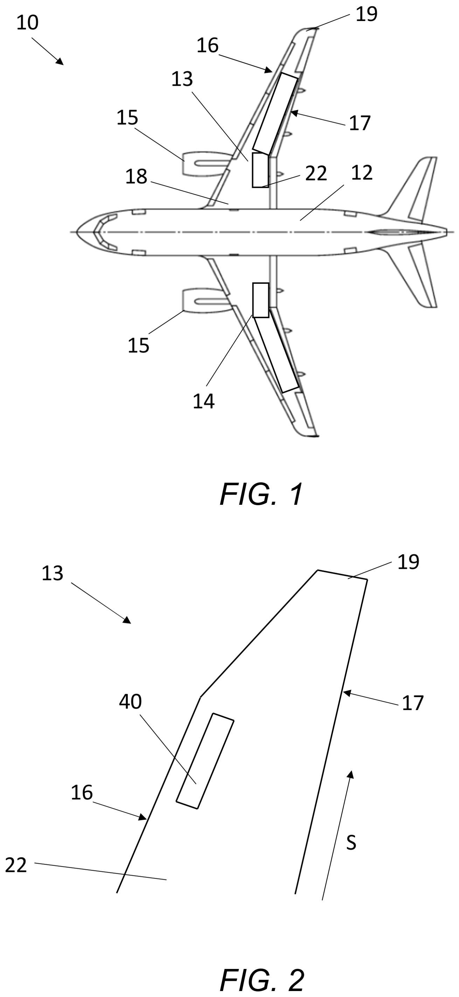

Figure 1 shows an aircraft 10. The aircraft 10 has a fuselage 12, and starboard and port fixed wings 13, 14. An engine 15 is mounted to each wing 13, 14. The aircraft 10 is a typical jet passenger transport aircraft but the invention is applicable to a wide variety of fixed wing aircraft types, including commercial, military, passenger, cargo, jet, propeller, general aviation, etc. with any number of engines attached to the wings or fuselage. The aircraft is a fixed wing aircraft with cantilever wings.

Each wing has a cantilevered wing structure with a length extending in a spanwise direction from a root 18 to a tip 19, with the root 18 being joined to the aircraft fuselage 12. The wings 13, 14 are similar in construction and so only the starboard wing 13 will be described in detail. The wing 13 has a leading edge 16 and a trailing edge 17. The leading edge 16 is at the forward end of the wing and the trailing edge 17 is at the rearward end of the wing.

The wing has an upper wing cover 22, a lower wing cover 24 and leading and trailing edge cover panels. These covers may be collectively referred to as the wing cover 20. The wing cover 20 has an outer aerodynamic surface which forms the outer aerodynamic surface of the wing 13. The wing 13 has an upper aerodynamic surface between the leading and trailing edges 16, 17 and a lower aerodynamic surface between the leading and trailing edges of the wing.

The wing 13 has a spanwise axis S which extends in a direction from the wing root 18 to the wing tip 19, and a chordwise axis which extends in the direction from the leading edge 16 to the trailing edge 17. The wing 13 has an aerofoil cross section. The wing 13 has a thickness direction perpendicular to the chordwise and spanwise directions.

Figure 2 shows a simplified representation of the wing 13 comprising a leading-edge spoiler device 40, which may be referred to hereinafter as a spoiler device 40. It is known to provide spoiler devices for disrupting airflow over an aircraft wing to spoil or reduce the lift generated by the wing. Although shown as being positioned adjacent the leading edge 16 of the wing 13, it will be appreciated that in some cases the spoiler device 40 may extend up to the leading edge 16 of the wing 13. It is preferable to position a spoiler device 40 closer towards a leading edge 16 of the wing 13 rather than towards the trailing edge 17 of the wing 13 since this improves lift reduction and reduces the twisting load applied to the wing 13 as a result of deploying the spoiler device 40. A leading edge spoiler device may provide improved loads alleviation as compared with a similarly sized trailing edge spoiler device. The closer the spoiler is to the leading edge 16, the lift generated by the wing is spoiled over a greater proportion of the wing chord. So rather than lift being spoiled only at the trailing edge of the wing, away from the wing neutral axis, with a leading edge spoiler the lift becomes spoiled over most of the wing, which also reduces the twisting effect of the spoiler deployment about the neutral axis. With a trailing edge spoiler, the pitching moment (wing leading edge twist up) effect of the spoiler deployment counteracts the loads alleviation of the spoiler deployment. With a leading edge spoiler this pitching moment is reduced and so the loads alleviation of the spoiler deployment is improved compared to the similarly sized trailing edge spoiler.

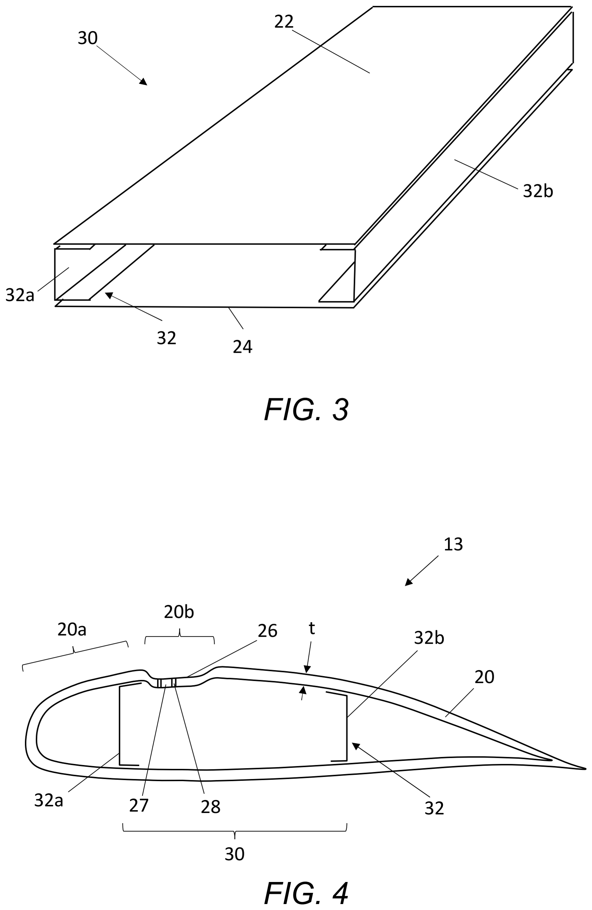

Figure 3 shows a schematic view of a wing box 30 of the wing 13 of the aircraft 1. The wing box 30 is arranged to support the majority of the loads applied to the wing 13. As shown in Figure 1, the wing 13 is tapered from the inboard root end of the wing 13 to the outboard tip end of the wing 13 such that the chord length of the wing 13 decreases from the inboard end to the outboard end, and the thickness of the wing 13 decreases from the inboard end to the outboard end. Correspondingly, the wing box 30 is also tapered in both these directions.

The wing box 30 comprises the upper cover 22 and lower cover 24 which form at least a portion of the outer aerodynamic surface of the wing 13. It will be appreciated that the wing box 30 of Figure 3 is schematic and that the upper cover 22 and the lower cover 24 are each non-planar. In particular, the upper cover 22 and lower cover 24 have an outer aerodynamic surface which each forms part of an aerofoil profile of the wing 13. The wing box 30 further comprises a wing structure 32 for supporting the wing cover 20. The wing structure 32 shown in Figure 3 comprises a front spar 32a and a rear spar 32b, the front spar 32a positioned towards the leading edge 16 of the wing 13 and the rear spar 32b positioned towards the trailing edge 17 of the wing 13. It will be appreciated that although shown as being generally C-shaped, each spar may take any profile. The upper cover 22 and lower cover 24 may be connected to the front spar 32a and the rear spar 32b using any suitable method, such as for example by fasteners and/or by bonding.

Figure 4 shows a schematic representation of a cross section of a wing 13 comprising the wing box 30 of Figure 3. It will be appreciated that, although shown as a single body, the wing cover 20 may be formed of multiple wing covers as described previously with respect to Figures 1 and 3. The wing cover 20 has an outer aerodynamic surface which forms an aerofoil profile of the wing 13 for generating lift. The wing cover 20 further defines a recess 26 stepped back from the wing aerofoil profile. That is to say that a recess 26 is formed in the outer aerodynamic surface of the wing cover 20. The recess 26 extends in the spanwise direction S of the wing 13. The recess 26 may, in some cases, increase the second moment of area of the wing cover 20, thus increasing the rigidity of the wing 13.

The wing cover 20 therefore comprises a first portion 20a having an outer aerodynamic surface that is exposed to air flow, and a second portion 20b defining the recess 26. Although shown in Figure 4 as being the portion of the wing cover 20 immediately forward of the recess 26, it will be appreciated that the first portion 20a may be considered as any portion of the wing cover 20 that does not have the recess 26. It is preferable to provide the wing cover 20 having a constant thickness t at all points around the wing aerofoil profile to reduce the likelihood of local areas of increased stress about the wing cover 20 forming. As such, the wing cover 20 may have a substantially constant thickness t at the first portion 20a and the second portion 20b. Such a region a constant cover thickness but stepped to provide the recess may be referred to as a 'joggle'. It will be appreciated that Figure 4 is a schematic representation and that the thickness of the wing cover 20 shown is not necessarily drawn accurately.

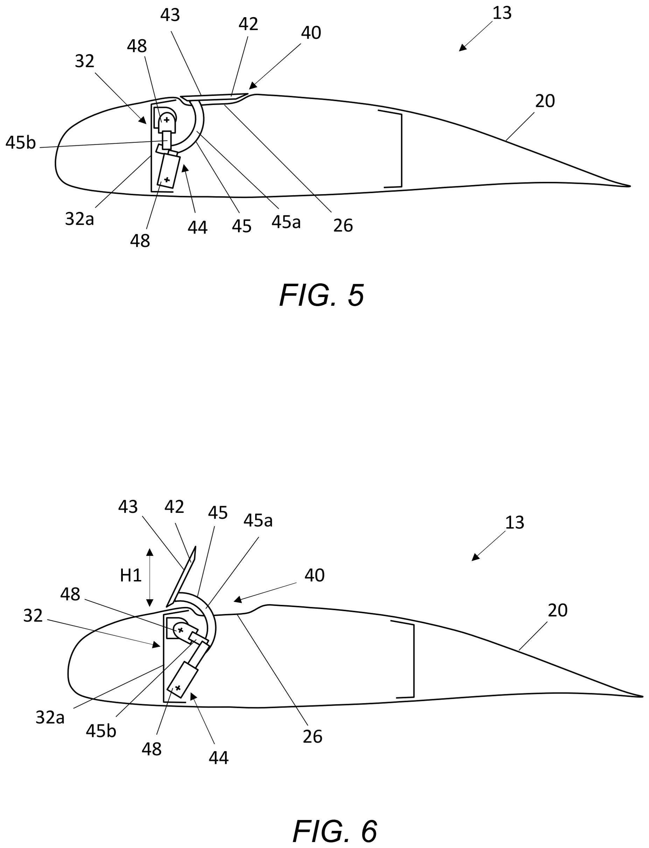

Figure 5 shows a further example of a wing 13 further comprising a spoiler device 40. For clarity, only the outer surface of the wing cover 20 is shown, although the wing cover 20 of Figure 5 may be substantially identical to the wing cover 20 of Figure 4. The spoiler device 40 comprises a spoiler 42 that is coupled to the wing 13, in particular to the wing structure 32 by a spoiler actuation mechanism 44. The spoiler actuation mechanism 44 is arranged to move the spoiler 42 between a retracted position (shown in Figure 5) and a deployed position (shown in Figure 6). The spoiler device 40 may therefore be said to be movable between a deployed and a retracted position.

In the retracted position, the spoiler 42 is housed entirely in the recess 26. The spoiler 42 may otherwise be said to be received in or contained in the recess 26 when retracted. As such, the spoiler 42 comprises a spoiler surface 43 which follows a contour of the wing aerofoil profile when the spoiler device 40 is retracted. The spoiler surface 43 may form a substantially continuous profile with the first portion 20a of the wing cover 20 to minimise the aerodynamic effect of the spoiler device 40 when the spoiler 42 is retracted. In the deployed position, the spoiler surface 43 is extended away from the wing cover 20 so as to disrupt air flow over the wing 13 and spoil lift generated by the wing 13. In the deployed position, the spoiler 42 extends by a maximum height H1 above the outer aerodynamic surface of the wing cover 20. The height H1 may be between 5% and 10% of the local chord of the aerofoil profile, for example approximately 6% of the local chord of the aerofoil profile.

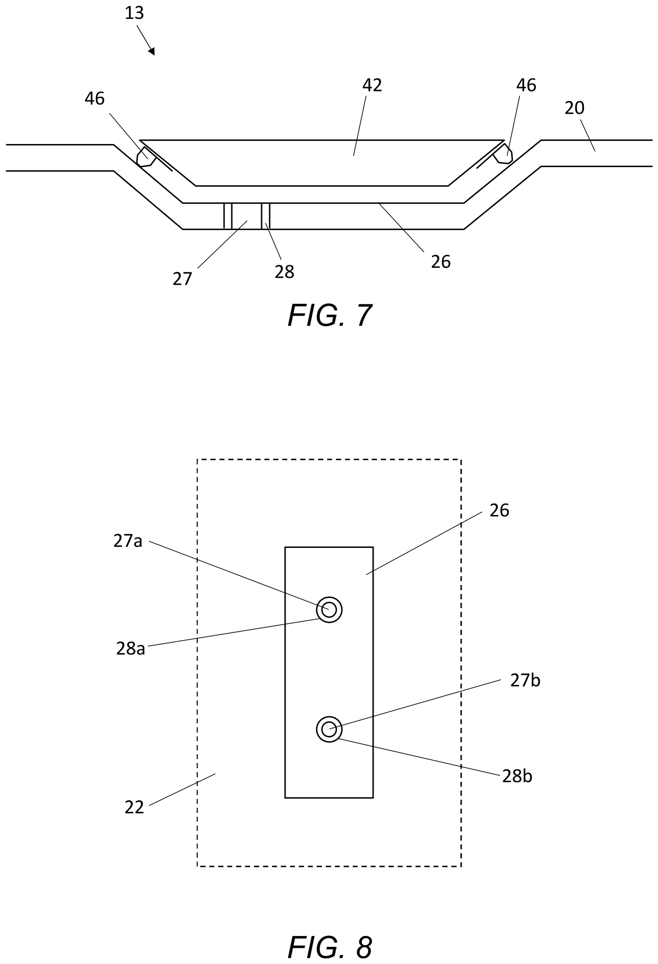

In the retracted position, it is beneficial to minimise the effect of the spoiler device 40 on the aerodynamic performance of the wing 13. As such, the spoiler 42 may comprise a spoiler seal 46 arranged to form a sealed interface between the spoiler 42 and the wing cover 20 when the spoiler device 40 is retracted. A sealed interface is here defined as an interface that does not permit a flow of air therethrough. This is especially important with a leading edge spoiler device as any gap may trip the airflow, increasing drag and reducing lift, when the spoiler is retracted. Figure 7 shows a schematic view of a portion of the wing 13 of Figure 5, with the spoiler actuation mechanism 44 omitted for clarity. The spoiler 42 comprises a spoiler seal 46 at a forward and a rearward edge thereof, however it will be appreciated that the spoiler seal 46 may extend around the entire perimeter of the spoiler 42. In the retracted position shown in Figure 7, the spoiler seal 46 engages with an outer surface of the recess 26 to form a sealed interface. By way of non-limiting example, the spoiler seal 46 may comprise an elastically deformable component coupled to the spoiler 42 and arranged to deform upon contact with the wing cover 30 to form the sealed interface. It will be appreciated that the profile of the spoiler seal 46 shown in Figure 7 is schematic only, and that the spoiler seal 46 may take any suitable form.

As discussed previously, it is preferable to position a spoiler device 40 towards the leading edge 16 of the wing 13. The spoiler device 40, and hence the recess 26 for receiving the spoiler 42, may therefore be provided towards the leading edge 16 of the wing 13. Where the wing 13 comprises a front spar 32a, the recess 26 may be located adjacent the front spar 32a. This configuration provides a convenient arrangement for coupling the spoiler 42 to the wing structure 32, by connecting the spoiler actuation mechanism 44 to the front spar 32a as shown in Figures 5 and 6. It is further preferable to provide the recess 26 immediately aft of the front spar 32a. The aerofoil profile of the wing 13 generally has a maximum height at this chordwise location, which may allow for the spoiler actuation mechanism 44 to be housed more easily within the wing cover 20.

It is preferable to provide the spoiler device 40 at a spanwise location of the wing 13 which is away from any liquid contained in the wing 13, such as for example a volume of liquid fuel stored in a fuel tank. That is to say that the spoiler device 40, in particular the portion of the spoiler mechanism 44 within the wing cover 20, is located not immediately adjacent to any liquid stored in the wing 13. This may increase the space available for housing the spoiler actuation mechanism 44 within the wing 13. Positioning the spoiler device 40 immediately adjacent a volume of stored liquid may also require a sealed volume or similar to be provided about the actuation mechanism 44, thus increasing part count and weight of the spoiler device 40.

Since the spoiler 42 is provided adjacent the outer aerodynamic surface of the wing 13, and the spoiler actuation mechanism 44 is coupled to an internal wing structure 32, it is necessary for the spoiler actuation mechanism 44 to extend through the wing cover 20. It will be appreciated that the spoiler actuation mechanism 44 extends through the wing cover 20 when the spoiler device is in both the retracted and the deployed position. The second portion 20b of the wing cover 20 having the recess 26 may therefore comprise at least one aperture 27 through which the spoiler actuation mechanism 44 extends, as shown most clearly in Figures 3 and 7. By providing only the spoiler actuation mechanism 44 as extending through the wing cover 20 (compared to for example providing a spoiler 42 which extends through the wing cover 20) the size of the aperture(s) 27 may be minimised.

Minimising the size of the apertures 27 reduces the negative effect on the reduction in structural stiffness of the wing torsion box due to the apertures. Minimising the size of the apertures 27 also may reduce the effect of the spoiler device 40 on the aerodynamic performance of the wing 13 when the spoiler device 40 is extended. To reduce the ingress of air flow into the wing 13, each aperture may further comprise an aperture seal 28 arranged to form a sealed interface with the spoiler actuation mechanism 44 extending therethrough. By way of non-limiting example, the aperture seal may comprise an elastically deformable component coupled to the wing cover 20 and contacting the spoiler actuation mechanism 44 to form a sealed interface therebetween.

Figure 8 shows a schematic top view of a portion of the upper panel 22 including the recess 26. The spoiler device 40 has been omitted such that the apertures 27 are visible. In the example shown, the spoiler actuation mechanism 44 extends through the wing cover 20 through a first aperture 27a and a second aperture 27b. Providing a spoiler actuation mechanism 44 that extends through a plurality of spaced apertures 27 may improve the stability and/or rigidity of the spoiler device 40 when in the deployed position. The total surface area of the first 27a and second aperture 27b may be less than 20% of the surface area of the spoiler surface 23 and/or less than 20% of the outer surface of the recess 26. Each aperture 27 is further provided with a first aperture seal 28a and a second aperture seal 28b respectively. It will be appreciated that although shown in Figure 8 as being a rectangular recess with circular apertures 27, both the recess 26 and the aperture(s) 27 may take any suitable shape.

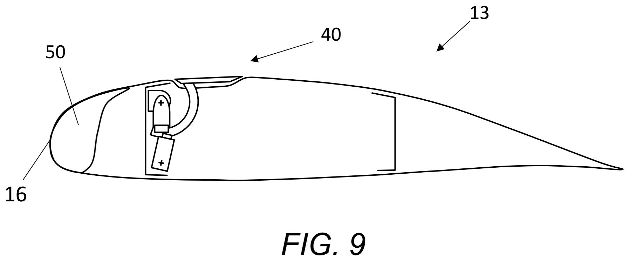

The spoiler device 40 may be positioned adjacent a high lift device 50. Figure 9 shows an example of a wing 13 comprising a high lift device 50 positioned fore of the spoiler device 40 at the leading edge 16 of the wing 13. Providing both a spoiler device 40 and a high lift device 50 at a common spanwise location along the wing 13 may provide a more efficient use of space along the wing span, since the arrangement provides both a lift increasing device and a lift spoiling device at a common spanwise location. It will be appreciated that the high lift device 50 may comprise any known leading edge high lift device, such as a deployable leading edge slat or Kruger flap, and as such the high lift device 50 may form a portion of the leading edge 16 of the wing 13.

When moving the spoiler 42 from the retracted to the deployed position, it may be preferable to both rotate and translate the spoiler 42. This may for example cause the spoiler surface 43 to move forwards towards the leading edge 16 of the wing 13 as the spoiler 42 is deployed, which may reduce twisting loads applied to the wing 13 as a result of lift generated by the wing being spoilt across most of the chord length. Figures 5 and 6 show an example of a spoiler actuation mechanism 44 configured to deploy the spoiler 42 in this manner. The spoiler actuation mechanism 44 comprises a link 45 rotatably coupled at a first end thereof to the wing structure 32. The point at which the first end of the link 45 is coupled to the wing structure 32 may be referred to as the rotation point. A second end of the link 45 distal to the first end is rigidly connected to the spoiler 42 at a forward location thereof. Rotating the link 45 relative to the wing structure 32 therefore causes rotation and translation of the spoiler 42 to move the spoiler device 40 between the retracted and deployed position. Although shown in Figures 5 and 6 as being rotated by two linear actuators 48, it will be appreciated that a any number (including one) of linear or rotary actuators or any other suitable arrangement may be used to rotate the link 45.

To minimise the required size of the aperture 27 through the wing cover 20, it is preferable to provide a link 45 having a constant radius of curvature relative to the point at which the link 45 is rotatably coupled to the wing structure 32. That is to say that the link 45 is shaped such that, as the link 45 rotates relative to the wing structure 32, the point at which the link 45 extends through the wing cover 20 does not move. This allows the aperture 27 to be sized to match the width or thickness of the link 45, with no requirement to accommodate movement of the link 45 in the chord-wise direction as it passes through the wing cover 20. In the example shown, this is achieved by providing a gooseneck link 45, comprising a curved portion 45a coupled to the spoiler 42 and an extension portion 45b extending between the curved portion 45a and the rotation point. It will be appreciated that although shown in Figures 5 and 6 as two distinct components rigidly connected, the curved portion 45a and the extension portion 45b of the gooseneck link 45 may be integrally formed.

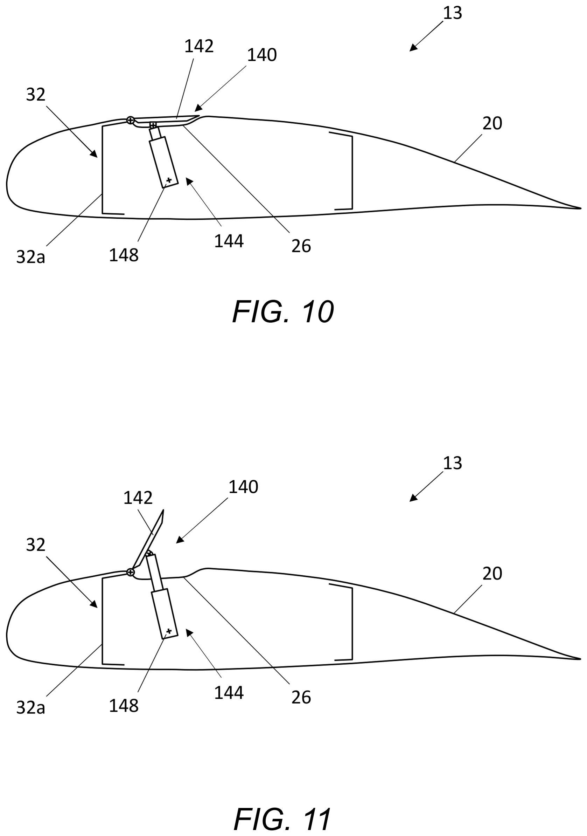

Figures 10 and 11 show an alternative spoiler device 140. Spoiler components similar to those of the spoiler device 40 are numbered using like reference numerals in the 100 series. The remaining features of the wing 13 are substantially identical to those already discussed and hence are labelled accordingly.

The spoiler 142 of Figures 10 and 11 is moved between the retracted position (shown in Figure 10) and the deployed position (shown in Figure 11) by rotation only. The spoiler device 140 comprises a spoiler 142 pivotably coupled to the wing structure, preferably at a forward-most point of the spoiler 142.

The spoiler actuation mechanism 144 comprises a linear actuator 148 pivotally coupled to the wing structure 32 at a first end of the linear actuator 148. The linear actuator 148 is also pivotally coupled to the spoiler 142 at a second end of the linear actuator 148, the second end of the linear actuator 148 being distal the first end. This arrangement may allow a single actuator 148 to be used to operate the spoiler device 140, or multiple actuators may be used.

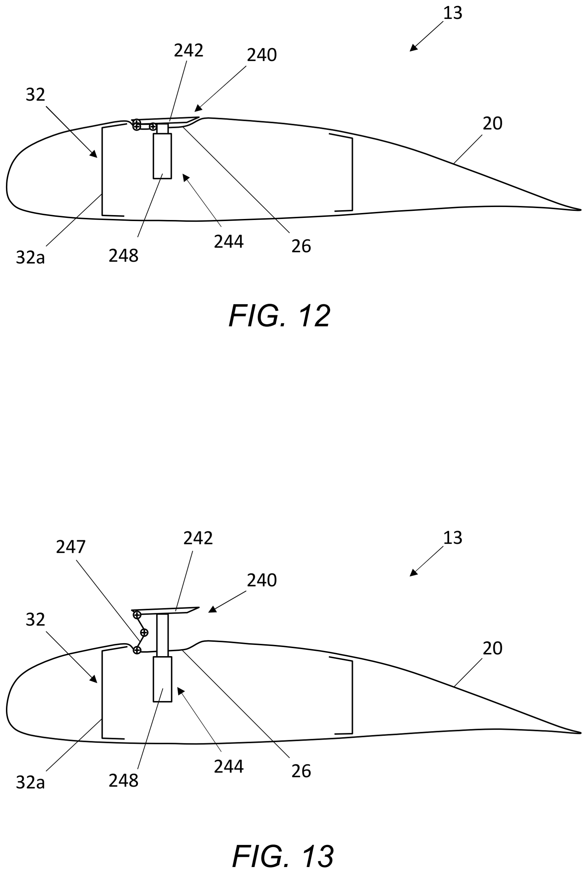

Figures 12 to 14 show a further alternative spoiler device 240. Spoiler components similar to those of the spoiler device 40 are numbered using like reference numerals in the 200 series. The remaining features of the wing 13 are substantially identical to those already discussed and hence are labelled accordingly.

The spoiler 242 of Figures 12 to 14 is moved between the retracted position (shown in Figure 12) and the deployed position (shown in Figure 13) by translation only. The spoiler device 240 comprises a spoiler 247 formed as a collapsible barrier between a spoiler panel 242 and the wing structure. The spoiler panel 242 is coupled to a linear actuator 248, the linear actuator 248 arranged to extend the spoiler panel 242 above the outer aerodynamic surface of the wing 13 when moving from the retracted to the deployed position. The spoiler panel extends generally in the wing chordwise and spanwise directions.

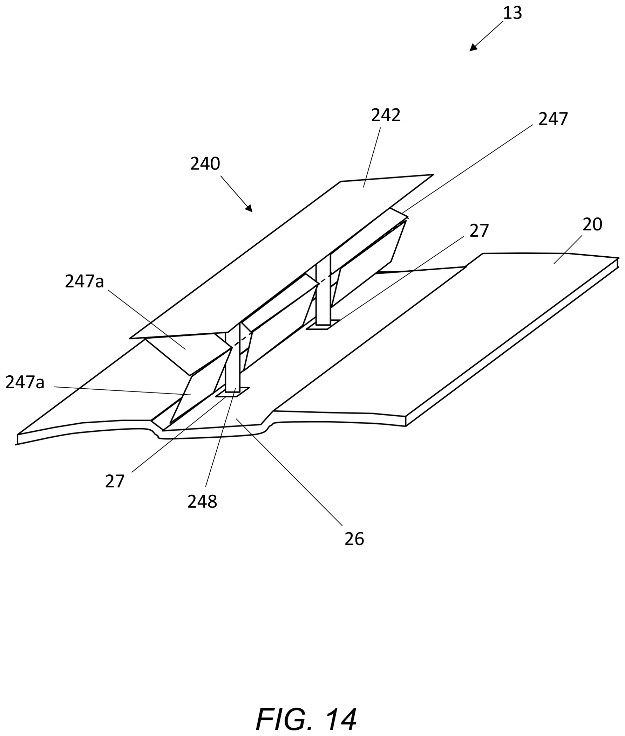

The collapsible barrier 247 blocks the flow of air between the spoiler panel 242 and the outer aerodynamic surface of the wing 13 when the spoiler device 240 is deployed. The collapsible barrier 247 is coupled to a forward portion of the spoiler panel 242 and to the wing structure adjacent the wing cover 20. Figure 14 shows a perspective view of a portion of a wing 13, showing the spoiler device 240 in the deployed position. In the illustrated example, the collapsible barrier 247 comprises a series of pivotally linked barrier panels 247a spaced along the spanwise length of the spoiler device 240. Each barrier panel 247a is pivotally coupled to a barrier panel 247a adjacent, and to the wing cover 20 or spoiler panel 242. The collapsible barrier spoiler 247 is stored entirely in the recess 26 when the spoiler device 240 is retracted such that only the spoiler actuation mechanism 244 extends through the wing cover 20.

It will be appreciated that any reference made hereinafter to a spoiler device 40 may also apply to the alternative spoiler device 140 or the further alternate spoiler device 240.

Although shown in all figures as being in the upper cover 22 of the wing 13, it will be appreciated that in some embodiments (not shown) the recess 26 and hence the spoiler device 40 may be located in the lower cover 24 of the wing 13. Providing the spoiler device to deploy from the lower wing surface may be beneficial for loads alleviation from negative gust loads and wing down-bending conditions. In further arrangements, spoiler device in both the upper and lower covers may be desirable.

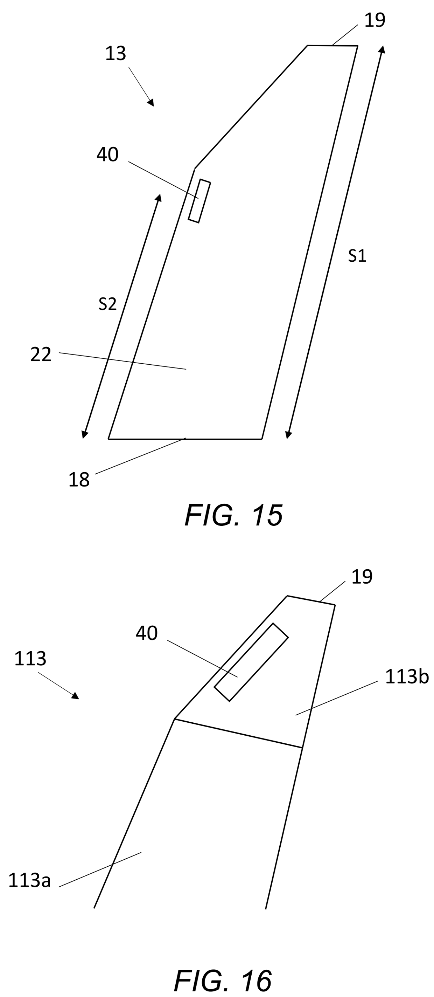

It may be preferable to position the spoiler device 40 at an outboard portion of the wing 13, since this results in improved loads alleviation (against wing bending) when the spoiler 42 is deployed, as compared with a spoiler device at a wing location further inboard in the spanwise direction. An outboard portion of the wing is here defined as a portion of the wing 13 located towards the wing tip 19. Figure 15 shows a further simplified representation of a wing 13 comprising a spoiler device 40. The wing 13 has a total wing span of length S1 measured from root 18 to tip 19, and the spoiler device 40 is located at a spanwise location at a spanwise length S2 from the root 18. The length S2 may be at least 60%, preferably at least 70%, further preferably at least 75% of the wing span S1.

The spoiler arrangement disclosed herein may also be applied to foldable aircraft wings. This may allow the spoiler device 40 to be positioned immediately adjacent the wing tip 19. Figure 16 shows an example of an alternative wing 113 comprising a fixed wing portion 113a and a folding wing tip portion 113b rotatable relative to the fixed wing portion 113a. The spoiler device 40 is provided in the folding wing tip portion 113b. The spoiler devices 40, 140, 240 discussed previously may be particularly beneficial for use in the folding wing tip portion 113b, since they may comprise simple spoiler actuation mechanisms 44, 144, 244 having reduced weight as compared to more complex methods of actuation. The folding portion of the wing may also be 'dry', i.e. without a fuel volume, making locating the spoiler towards the leading edge more suitable than where the wing location has a fuel carrying volume.

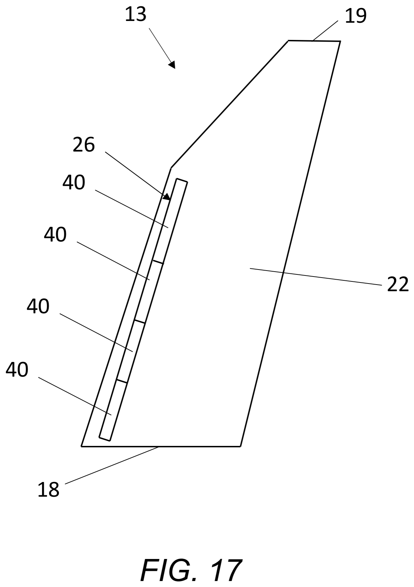

The recess 26 may extend over the majority of the span of the wing 13 as shown for example in Figure 17. As such, the wing 13 may comprise a plurality of spoiler devices 40 each received in a common recess 26 when retracted. Although Figure 17 shows a wing 13 comprising four spoiler devices 40, it will be appreciated that the wing 13 may comprise any number of spoiler devices 40. Each spoiler device 40 may be operated independently with respect to the other spoiler devices. The edges of the plurality of spoiler devices 40 may abut one another along the spanwise direction of the wing 13. Providing a single common recess 26 in which multiple spoiler devices 40 are received may improve the structural integrity of the wing cover 20, since the single recess 26 may be formed as an integral feature of, for example, the upper cover 22 such that the wing cover 20 has a constant thickness at all points about the wing profile. In an alternative example (not shown), the wing comprises a plurality of discrete recesses spaced apart from one another, and a plurality of spoiler devices each received in a respective discrete recess.

It may be preferable to position the spoiler device 40 at a spanwise location along the wing 13 having no high lift device at the trailing edge 17 of the wing 13. This is because the beneficial effect of reducing wing twist available with a leading edge spoiler (as compared to a trailing edge spoiler) would be reduced if the wing structure needs to accommodate the pitching effect of trailing edge high lift devices anyway.

It may be preferable to position the leading edge spoiler at a spanwise location along the wing 13 without ailerons/flaperons. Whilst it may be possible to collate these devices, it may be preferable for roll control authority to position the spoiler device away from the aileron.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. An aircraft wing comprising:
a wing structure supporting a wing cover, the wing cover having an outer aerodynamic surface, which forms part of an aerofoil profile of the wing, and a recess stepped back from the wing aerofoil profile; and
a spoiler device comprising a spoiler coupled to the wing structure by a spoiler actuation mechanism for moving the spoiler between a retracted position and a deployed position, the spoiler having a surface which follows a contour of the wing aerofoil profile and where the spoiler is housed entirely in the recess when the spoiler is in the retracted position, and wherein the spoiler surface is extended away from the wing cover when the spoiler is in the deployed position.

2. An aircraft wing according to claim 1, wherein the wing cover has a substantially constant thickness at a first portion having the outer aerodynamic surface and a second portion having the recess.

3. An aircraft wing according to any preceding claim, wherein the spoiler comprises a spoiler seal arranged to engage the wing cover to form a sealed interface between the spoiler surface and the outer aerodynamic surface of the wing cover when the spoiler is in the retracted position.

4. An aircraft wing according to any preceding claim, wherein the spoiler actuation mechanism extends through at least one aperture in the portion of the wing cover having the recess, optionally wherein the aperture(s) have an area of less than 20% of the area of the spoiler surface.

5. An aircraft wing according to claim 4, wherein each aperture comprises an aperture seal.

6. An aircraft wing according to any preceding claim, wherein the wing structure includes a front spar, and wherein the recess in the wing cover is located adjacent the front spar, and preferably is located immediately aft of the front spar.

7. An aircraft wing according to any preceding claim, wherein the wing cover is an upper wing cover.

8. An aircraft wing according to any preceding claim, wherein the spoiler is located at an outboard portion of the wing, preferably at a spanwise location of at least 60% of the wing span.

9. An aircraft wing according to any preceding claim, wherein the aircraft wing comprises a fixed wing portion and a folding wing tip portion rotatable relative to the fixed wing portion, and wherein the spoiler device is provided in the folding wing tip portion of the aircraft wing.

10. An aircraft wing according to any preceding claim, further comprising a leading edge movable high lift device positioned fore of the spoiler device.

11. An aircraft wing according to any preceding claim, wherein the spoiler device is located at a portion of the wing which is away from a contained liquid fuel volume.

12. An aircraft wing according to any preceding claim, wherein the spoiler device is located at a spanwise location of the wing having no trailing edge high lift device.

13. An aircraft wing according to any preceding claim, wherein the spoiler actuation mechanism is configured to move the spoiler in rotation and/or in translation from the retracted position to the deployed position,
preferably wherein the actuation mechanism comprises at least one link arranged to rotate relative to the wing structure, the link coupled to a forward portion of the spoiler,
preferably wherein the link comprises a curved portion having a constant radius of curvature relative to the point at which it is rotatably coupled to the wing structure, and an extension portion extending between the curved position and the rotation point so as to form a gooseneck.

14. An aircraft wing according to any preceding claim, further comprising a plurality of the spoiler devices arranged in a spanwise direction of the aircraft wing, wherein the plurality of spoiler devices are received within a common recess of the wing cover when in their respective retracted positions.

15. An aircraft comprising the aircraft wing of any preceding claim.
